**Europäisches Patentamt**

**European Patent Office**

**Office européen des brevets**

(19)

(11) Veröffentlichungsnummer: **0 136 970**
**B1**

(12) # EUROPÄISCHE PATENTSCHRIFT

(45) Veröffentlichungstag der Patentschrift:
**18.03.87**

(51) Int. Cl.⁴: **B 60 P 1/02**

(21) Anmeldenummer: **84810345.3**

(22) Anmeldetag: **13.07.84**

(54) **Transportfahrzeug.**

(30) Priorität: **09.06.83 DE 3328705**

(43) Veröffentlichungstag der Anmeldung:
**10.04.85 Patentblatt 85/15**

(45) Bekanntmachung des Hinweises auf die Patenterteilung:
**18.03.87 Patentblatt 87/12**

(84) Benannte Vertragsstaaten:
**AT BE CH DE FR GB IT LI LU NL SE**

(56) Entgegenhaltungen:
**GB-A-2 053 157**
**US-A-2 940 769**
**US-A-2 981 548**

(73) Patentinhaber: **SCHWEIZERISCHE ALUMINIUM AG, CH- 3965 Chippis (CH)**

(72) Erfinder: **Mittelmann, Gerhard, zur Halde 14, D-7763 Oehningen (DE)**

EP 0 136 970 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Transportfahrzeug, insbesondere zum Einsatz auf Flughäfen zum Beladen von Flugzeugen, mit zumindest zwei sich etwa spiegelbildlich gegenüberliegenden, an einer Ladepritsche und an einem Aufbau angelenkten Hubeinrichtungen aus jeweils zwei gelenkig miteinander verbundenen Hebeln, sowie einer zum Anheben des Aufbaus die Hebel spreizenden hydraulischen Einheit (siehe US-A-2981548).

Insbesondere auf Flughäfen befinden sich sogenannte Catering-Fahrzeuge im Einsatz, welche Ladegut, beispielsweise Verpflegung, zu den Flugzeugen bringen. Sie sind in der Regel selbstfahrend ausgebildet und haben eine Ladepritsche, auf welcher ein Aufbau gesetzt ist, der mittels hydraulischen Hubeinrichtungen in die Höhe der Ladeöffnung des Flugzeuges angehoben werden kann.

Die bekannten Hubeinrichtungen bestehen dabei in der Regel aus einer Schere, wobei sich die beiden Scherenschenkel beim Anheben des Aufbaus einander annähern, so dass die Schere immer schmaler wird, je höher der Aufbau angehoben werden muss. Dies wirkt sich ausserordentlich ungünstig auf die Tragfähigkeit und Ballance des gesamten Systems aus. In der Praxis hat die gleichfalls ungünstige Kraftübertragung von Schere auf die Ladepritsche bzw. den Aufbau dazu geführt, dass Zusatzeinrichtungen zum Halten bzw. Abstützen angeordnet werden mussten. Dies hat wiederum zur Folge, dass sich das Eigengewicht des Transportfahrzeugs erhöht und das Verhältnis von Nutzlast zu Eigengewicht ungünstig wird.

Durch die US-A-2 981 548 ist ein Fahrzeug mit vier Hubeinrichtungen bekannt geworden, die sich etwa spiegelbildlich gegenüberliegen. Jede dieser Hubeinrichtungen setzt sich in aufwendiger Weise aus einem unteren Hebelpaar und einem oberen Hebel zusammen, wobei die hydraulische Einheit zwischen dem unteren Hebelpaar verläuft und mit seinem unteren Ende an einem besonderen Stützteil der Hubeinrichtung angelenkt ist.

Angesichts dieses Standes der Technik hat sich der Erfinder das Ziel gesetzt, ein Transportfahrzeug der eingangs erwähnten Art so zu verbessern, dass die Hubeinrichtungen für den Aufbau möglichst einfach sind und der Verstellbereich der hydraulischen Einheit möglichst gross ausgelegt werden kann. Ausserdem soll die hydraulische Einheit so angeordnet sein, dass sie in abgesenkter Lage möglichst parallel zu den Hebeln liegt.

Zur Lösung dieser Aufgabe führt, dass die Hebel als Kniehebel mit jeweils einem kurzen Schenkel und einem mit dem kurzen Schenkel fest verbundenen längeren Schenkelstreifen ausgebildet sind, wobei die kurzen Schenkel beider Kniehebel an ihren freien Enden durch einen Lagerbolzen od. dgl. Drehachse verbunden sowie die Schenkelstreifen am Aufbau bzw. der Ladepritsche angelenkt sind, und dass die hydraulische Einheit einends am Uebergang des Schenkelstreifens in den kurzen Schenkel eines der Kniehebel sowie andernends an der Ladepritsche angelenkt ist. Dabei soll die Mittelachse des Schenkelstreifens des Kniehebels mit der Achse des kurzen Schenkels einen Winkel von mehr als 90° einschliessen.

Durch diese Anordnung ist ein sicheres Anheben und Halten des Aufbaus gewährleistet. Dabei liegt im Rahmen der Erfindung, daß entweder zwei derartige Hubeinrichtungen etwa mittig auf der Ladepritsche angeordnet sind, als auch daß vier Hubeinrichtungen jeweils an den vier Ecken der Ladepritsche bzw. des Aufbaus angelenkt sind. Sollten nur zwei Hubeinrichtungen vorgesehen sein, so weisen diese entsprechende seitliche Abstützungen am Chassis wie auch am Aufbau auf.

Im übrigen liegen die Hubeinrichtungen jeweils mit ihren kurzen Schenkeln zueinander, wobei in abgesenkter Lage des Aufbaus sich beide Kniehebel einander annähern.

Jeder Kniehebel ist so ausgebildet, daß eine Mittelachse des Schenkelstreifens mit der Achse des abgekröpften kürzeren Schenkels einen Winkel von größer als 90° einschließt. Bevorzugt und um Produktionskosten zu sparen, sollen beide Winkel etwa gleich sein, so daß nur ein Formwerkzeug bzw. eine Produktionslinie für beide Kniehebel vorgesehen werden muß.

Die hydraulische Einheit ist einerseits mit der Ladepritsche, bevorzugt an der gleichen Stelle wie der Schenkelstreifen des einen Kniehebels, verbunden, während sie andererseits eine gelenkige Einheit mit dem Kniehebel, welcher an den Aufbau anschließt, bildet. Bevorzugt ist als Verbindungspunkt mit diesem Kniehebel der Treffpunkt der Mittelachse des Schenkelstreifens mit der Achse des Schenkels vorgesehen.

Bei Bedarf kann auch die hydraulische Einheit einerseits am Aufbau und andererseits an den Kniehebel, welcher mit der Ladepritsche verbunden ist, angeordnet werden. Die Wirkung ist dabei die gleiche. Beim Betätigen der hydraulischen Einheit werden beide Kniehebel infolge der unterschiedlichen Anlenkungspunkte von hydraulischer Einheit und Kniehebel zueinander gespreizt. Ein wesentlicher Vorteil dieser Anordnung liegt dabei darin, daß weder die Anforderungen an die notwendige Ballance noch die notwendige Kraftübertragung von Aufbau über hydraulische Einheit auf Ladepritsche mit zunehmender Höhe leidet. Zum zweiten kann jede einzelne Hubeinrichtung gesondert angesteuert werden, so daß die Lage des Aufbaus im Verhältnis zur Ladepritsche auch verändert werden kann. Dies ist insbesondere bei nicht-ebenem Fahrgrund sehr vorteilhaft. Weiterhin wird erfindungsgemäß daran gedacht, die Hubeinrichtungen durch einen Mikroprozessor anzusteuern, welcher neben der Ballancesteuerung auch ein Programm enthält, welches eine vorbestimmte Höhe beispielsweise je nach dem Flugzeugtyp bzw. der Höhe der Ladeöffnung des Flugzeugs über dem Erdboden, vorschreibt.

Weiterhin soll an der Stirnseite des Aufbaus eine Schiene zur Führung einer Ladebrücke vorgesehen sein. Beim Anheben des Aufbaus sinkt die Ladebrücke nach unten und bildet mit dem Boden des Aufbaus eine Entladeebene. Beim Absenken des Aufbaus trifft die Ladebrücke auf das Führerhaus und gleitet dann geführt durch die Schiene nach oben. Hierbei soll sie gegebenenfalls einen Rolladen mitnehmen, welcher den Aufbau zumindest teilweise verschließt.

Weiter Vorteile, Merkmale und Einzelheiten der Erfindung ergeben sich aus der nachfolgenden Beschreibung eines bevorzugten Ausführungsbeispiels sowie anhand der Zeichnung; diese zeigt in

Fig. 1 eine Seitenansicht eines Transportfahrzeuges mit abgesenktem Aufbau;

Fig. 2 eine Seitenansicht des Fahrzeugs nach Fig. 1 mit angehobenem Aufbau.

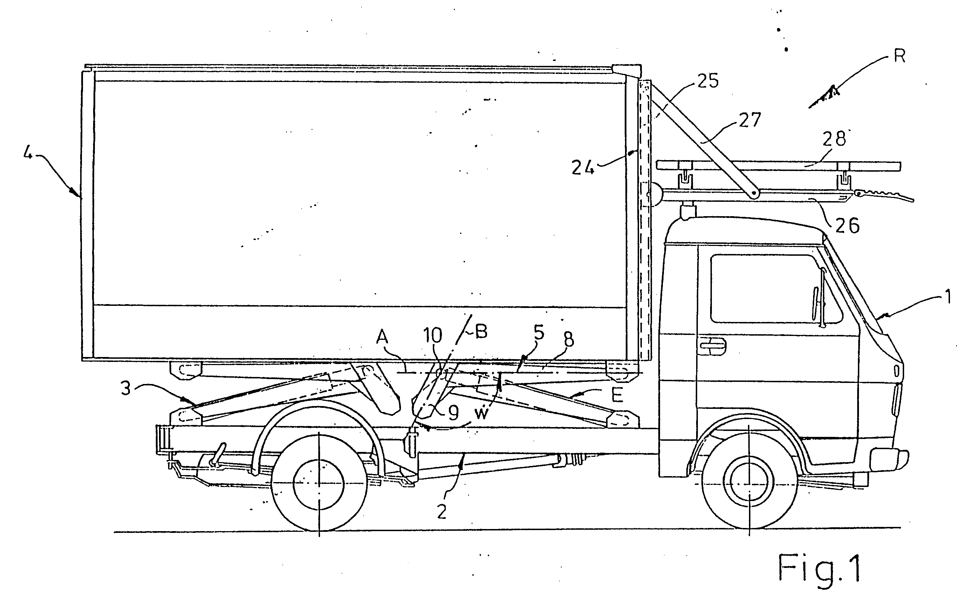

Ein Transportfahrzeug R, insbesondere zum Transport von Verpflegung für Flugzeuge und bestimmt für den Einsatz auf Flughäfen, weist nach Fig. 1 hinter einem Führerhaus 1 eine Ladepritsche 2 auf. Diese ist von Hubeinrichtungen 3 zum Anheben eines Aufbaus 4 belegt.

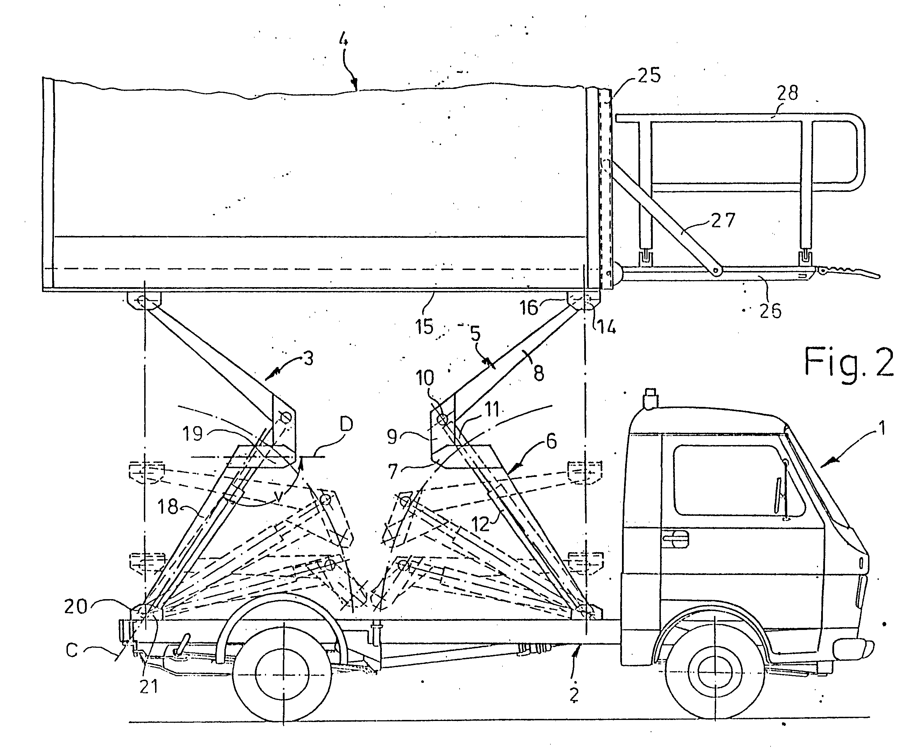

Eine Hubeinrichtung 3 besteht im wesentlichen aus zwei Kniehebeln 5 und 6, welche über einen Lagerbolzen 7 (nur angedeutet in Fig. 2) od. dgl. verbunden sind, wobei dieser Lagerbolzen 7 gleichzeitig die Drehachse beider Kniehebel 5 und 6 zueinander bildet.

Der Kniehebel 5 weist einen langen Schenkelstreifen 8 mit einer Mittelachse A auf, welche mit einer Achse B eines abgekröpften kürzeren Schenkels 9 einen Winkel w von größer als 90° einschließt. Der Treffpunkt 10 der beiden Achse A und B bildet gleichzeitig die Stelle der Anlenkung eines aus einem Zylinder 12 ausfahrbaren Kolbens 11 einer hydraulischen Einheit E. Gegenüber von Punkt 10 ist der lange Schenkelstreifen 8 über eine Drehachse 14 mit einer der Unterseite 15 des Aufbaus 4 angeformten Lasche 16 verbunden.

Der andere Kniehebel 6 besteht ebenfalls aus einem langen Schenkelstreifen 18 mit einer Mittelachse C und einem kurzen abgekröpften Schenkel 19 mit einer Achse D. Achse C und Achse D schließen einen Winkel v von größer als 90° zwischen sich ein. Jenseits des Schenkels 19 ist der Schenkelstreifen 18 wiederum über eine Drehachse 20 mit einer der Ladepritsche 2 angeformten Lasche 21 verbunden. An diese Lasche 21 ist auch der Zylinder 12 der hydraulischen Einheit E angelenkt.

Der Lagerbolzen 7, welcher die Drehachse für beide Kniehebel 5 und 6 bildet, befindet sich am jeweiligen Kopf der abgekröpften Schenkel 9 und 19, wobei die Lage der beiden Kniehebel 5 und 6 bei abgesenktem Aufbau 4 (siehe Fig. 1) sich annähert.

Eine so gestaltete Hubeinrichtung 3 wird bevorzugt vierfach pro Transportfahrzeug R vorgesehen, wobei jeweils zwei Hubeinrichtungen etwa spiegelbildlich angeordnet sind und sich mit den kurzen Schenkeln 9 bzw. 19 beim Absenken des Aufbaus nahekommen. Verschiedene Positionen der Hubeinrichtung 3 bzw. des Aufbaus 4 sind in Fig. 2 gestrichelt dargestellt.

An einer Stirnseite 24 des Aufbaus 4 ist eine Schiene 25 angeordnet, welche als Führung für eine Ladebrücke 26 mit einer Halterung 27 sowie, einem Geländer 28 dient. Wird der Aufbau 4 angehoben, gleitet die Ladebrücke 26 in eine in Fig. 2 gezeigte Gebrauchslage.

Aus dem Innern des Aufbaus 4 kann dann das Ladegut entnommen werden. Beim Absenken des Aufbaus dagegen trifft die Ladebrücke 26 auf das Führerhaus 1 und gleitet dann in der Schiene 25 an der Stirnseite 24 des Aufbaus 4 nach oben, wobei sie gegebenenfalls - nicht dargestellt - einen Rolladen zum zumindest teilweisen Verschließen des Aufbaus mit sich nimmt.

**Patentansprüche**

1. Transportfahrzeug, insbesondere zum Einsatz auf Flughäfen zum Beladen von Flugzeugen, mit zumindest zwei sich etwa spiegelbildlich gegenüberliegenden, an einer Ladepritsche und an einem Aufbau angelenkten Hubeinrichtungen aus jeweils zwei gelenkig miteinander verbundenen Hebeln, sowie einer zum Anheben des Aufbaus die Hebel spreizenden hydraulischen Einheit, dadurch gekennzeichnet, dass die Hebel als Kniehebel (5, 6) mit jeweils einem kurzen Schenkel (9, 19) und einem mit dem kurzen Schenkel fest verbundenen längeren Schenkelstreifen (8, 18) ausgebildet sind, wobei die kurzen Schenkel beider Kniehebel an ihren freien Enden durch einen Lagerbolzen (7) od. dgl. Drehachse verbunden sowie die Schenkelstreifen am Aufbau (4) bzw. der Ladepritsche (2) angelenkt sind, und dass die hydraulische Einheit (E) einends am Uebergang des Schenkelstreifens in den kurzen Schenkel eines der Kniehebel sowie andernends an der Ladepritsche angelenkt ist.

2. Transportfahrzeug nach Anspruch 1, dadurch gekennzeichnet, dass die Mittelachse (A, C) des Schenkelstreifens (8, 18) des Kniehebels (5, 6) mit der Achse (B, D) des kurzen Schenkels (9, 19) einen Winkel (w, v) von mehr als 90° einschliesst.

3. Transportfahrzeug nach Anspruch 2, dadurch gekennzeichnet, dass beide Winkel (w, v) der Kniehebel (5, 6) einer Hubeinrichtung (3) gleich sind.

4. Transportfahrzeug nach wenigstens einem der Ansprüche 1 bis 3, dadurch gekennzeichnet, dass die hydraulische Einheit (E) und der Schenkelstreifen (18) des Kniehebels (6) über die gleiche Lasche (21) an der Ladepritsche (2) angelenkt sind.

5. Transportfahrzeug nach wenigstens einem der Ansprüche 1 bis 4, dadurch gekennzeichnet, dass die Hubeinrichtungen (3) an elektronische Ballancesteuerungen angeschlossen sind, welche die einzelnen hydraulischen Einheiten (E) gesondert ansteuern.

6. Transportfahrzeug nach wenigstens einem der Ansprüche 1 bis 5, dadurch gekennzeichnet, dass an die Hubeinrichtungen (3) ein Mikroprozessor gekoppelt ist, welcher den Aufbau (4) auf eine vorgegebene Höhe anheben lässt.

7. Transportfahrzeug nach wenigstens einem der Ansprüche 1 bis 6, dadurch gekennzeichnet, dass der Aufbau (4) stirnseitig eine Schiene (25) als Führung für eine höhenveränderliche Ladebrücke (26) aufweist.

8. Transportfahrzeug nach Anspruch 7, dadurch gekennzeichnet, dass mit der Verschiebung der Ladebrücke (16) der Aufbau (4) zumindest teilweise verschliessbar ist, indem an die Ladebrücke ein Rolladen anschliesst.

## Claims

1. Transport vehicle, especially for use at airports for loading of aircraft, having at least two hoists lying oppositely nearly in mirror image and articulated to a load platform and a superstructure, each hoist comprising two articulatedly interconnected levers and a hydraulic unit which spreads the levers apart to lift the superstructure,
    characterised in that
    the levers are formed as toggle levers (5,6) each with a short leg (9,19) and a longer leg strip (8,18) firmly connected with the short leg, the short legs of the two toggle levers being connected at their free ends by a bearing bolt (7) or the like pivot spindle and the leg strips being articulated to the superstructure (4) and the load platform (2) respectively, and in that the hydraulic unit (E) is articulated at one end to the transition of the leg strip into the short leg of one of the toggle levers and at the other end to the load platform.

2. Transport vehicle according to Claim 1, characterised in that the central axis (A,C) of the leg strip (8,18) of the toggle lever (5,6) includes with the axis (B,D) of the short leg (9,19) an angle (w,v) of more than 90°.

3. Transport vehicle according to Claim 2, characterised in that the two angles (w,v) of the toggle levers (5,6) of one hoist (3) are equal.

4. Transport vehicle according to at least one of Claims 1 to 3, characterised in that the hydraulic unit (E) and the leg strip (18) of the toggle lever (6) are articulated to the load platform (2) through the same shackle (21).

5. Transport vehicle according to at least one of Claims 1 to 4, characterised in that the hoists (3) are connected to electronic balance control systems which separately actuate the individual hydraulic units (E).

6. Transport vehicle according to at least one of Claims 1 to 5, characterised in that a microprocessor which causes the superstructure (4) to be lifted to a predetermined height is coupled to the hoists (3).

7. Transport vehicle according to at least one of Claims 1 to 6, characterised in that the superstructure (4) comprises at the end a rail (25) as guide for a load bridge (26) of variable height.

8. Transport vehicle according to Claim 7, characterised in that with the displacement of the load bridge (16) the superstructure (4) is at least partially closable, in that a roller shutter adjoins the load bridge.

## Revendications

1. Véhicule de transport, notamment pour utilisation dans des aéroports, pour charger des avions, comportant au moins deux dispositifs élévateurs disposés en vis-à-vis, sensiblement selon une symétrie de miroir, sur un plateau de chargement, et articulés sur une carosserie, chaque dispositif élévateur étant constitué de deux leviers mutuellement liés par articulation, et d'une unité hydraulique déployant les leviers pour lever la carosserie,
    caractérisé
    en ce que les leviers sont réalisés en tant que leviers à genouillère (5, 6) avec à chaque fois une branche courte (9, 19) et une branche plus longue en forme de bande (8, 18) inamoviblement liée à la branche courte, les branches courtes des deux leviers à genouillère étant, en leurs extrémités libres, reliées par un tourillon (7) ou par un axe de rotation analogue, et les branches en forme de bande étant articulées sur la carosserie (4) ou le plateau de chargement (2), et en ce que l'unité hydraulique (E) est reliée par articulation, par une extrémité, à la transition de la branche en forme de bande à la branche courte de l'un des leviers à genouillère, et, par son autre extrémité, au plateau de chargement.

2. Véhicule de transport selon la revendication 1, caractérisé en ce que l'axe médian (A,C) de la branche en forme de bande (8,18) du levier à genouillère (5,6) forme, avec l'axe (B,D) de la branche courte (9,19), un angle (w,v) de plus de 90°.

3. Véhicule de transport selon la revendication 2, caractérisé en ce que les deux angles (w,v) du levier à genouillère (5,6) d'un dispositif élévateur (3) sont égaux.

4. Véhicule de transport selon au moins l'une des revendications 1 à 3, caractérisé en ce que l'unité hydraulique (E) et la branche en forme de bande (18) du levier à genouillère (6) sont articulées sur le plateau de chargement (2), au moyen de la même attache (21).

5. Véhicule de transport selon au moins l'une des revendications 1 à 4, caractérisé en ce que les moyens élévateurs (3) sont raccordés à des commandes électroniques d'équilibrage qui commandent séparément les unités hydrauliques individuelles (E).

6. Véhicule de transport selon au moins l'une des revendications 1 à 5, caractérisé en ce qu'un microprocesseur est couplé aux dispositifs élévateurs (3) et provoque le levage de la carosserie (4) à une hauteur prédéterminée.

7. Véhicule de transport selon au moins l'une des revendications 1 à 6, caractérisé en ce que la carosserie (4) présente, côté frontal, un rail (25) servant de guide pour un pont de chargement (26) de hauteur variable.

8. Véhicule de transport selon la revendication 7, caractérisé en ce que la carosserie (4) est au moins partiellement fermée par le déplacement du pont de chargement (16) auquel se rattache un volet roulant.

Fig.1

Fig.2

0 136 970